# EUROPEAN PATENT SPECIFICATION

(11) **EP 2 468 469 B1**
(45) Date of publication and mention of the grant of the patent: **09.05.2018**
(21) Application number: 10810036.3
(22) Date of filing: 20.08.2010
(51) Int. Cl.: B29C 33/04, B29C 35/04, B29C 35/02, B29L 30/00

(54) **BASE-TIRE MANUFACTURING METHOD, VULCANIZATION DEVICE**
BASISREIFENHERSTELLUNGSVERFAHREN, VULKANISIERUNGSVORRICHTUNG
PROCÉDÉ DE FABRICATION DE PNEU DE BASE, DISPOSITIF DE VULCANISATION

(30) Priority: 21.08.2009 JP 2009191885
(43) Date of publication of application: 27.06.2012
(73) Proprietor: Kabushiki Kaisha Bridgestone, Tokyo 104-8340 (JP)
(72) Inventor: KIMIYA Yosuke, Kodaira-shi Tokyo 187-8531 (JP)
(74) Representative: Oxley, Robin John George
(86) International application number: PCT/JP2010/064103
(87) International publication number: WO 2011/021695

(56) References cited:
- EP-A1- 1 743 755
- EP-A2- 1 172 198
- JP-A- 7 195 370
- JP-A- 8 174 554
- JP-A- 10 193 472
- JP-A- 11 165 320
- JP-A- H01 184 106
- JP-A- 2000 043 048
- JP-A- 2002 036 243
- JP-A- 2002 172 624
- JP-A- 2005 238 589
- JP-A- 2006 035 615
- JP-A- 2008 012 883
- JP-U- H0 180 306
- KR-A- 20040 064 434
- US-A- 4 568 259

## Description

### TECHNICAL FIELD

The present invention relates to a curing ("vulcanizing") machine or the like using heating means and curing molds in a heating process for a green tire which is to become a base tire.

### BACKGROUND ART

Tires used on vehicles, such as trucks and buses, are subject to excessive wear of rubber on the tread surface, which comes in contact with the road, due to the heavy load working on the tire. Thus, such tires come to the end of their lives before the expiration of the normal life of tread rubber, even when the base (body) parts of the tire are still strong enough to withstand continued use. For trucks, buses, and like vehicles, therefore, the regenerated (retreaded) tire is often used whose function as the tire is restored by attaching, in bonding or fusion, a new tread rubber (tire tread) onto the surface of a used tire prepared by cutting the worn tread rubber off.

Disclosed in Patent Document 1 is one of the methods for manufacturing a new tire to be used as a regenerated tire as described above. In the proposed method, a base tire, which serves as the structurally basic part of a tire, and a tread rubber, which is the part subject to tire abrasion, are manufactured as separate products. Then the tread rubber is bonded or fused onto the base tire to be integrally structured together into a new tire.

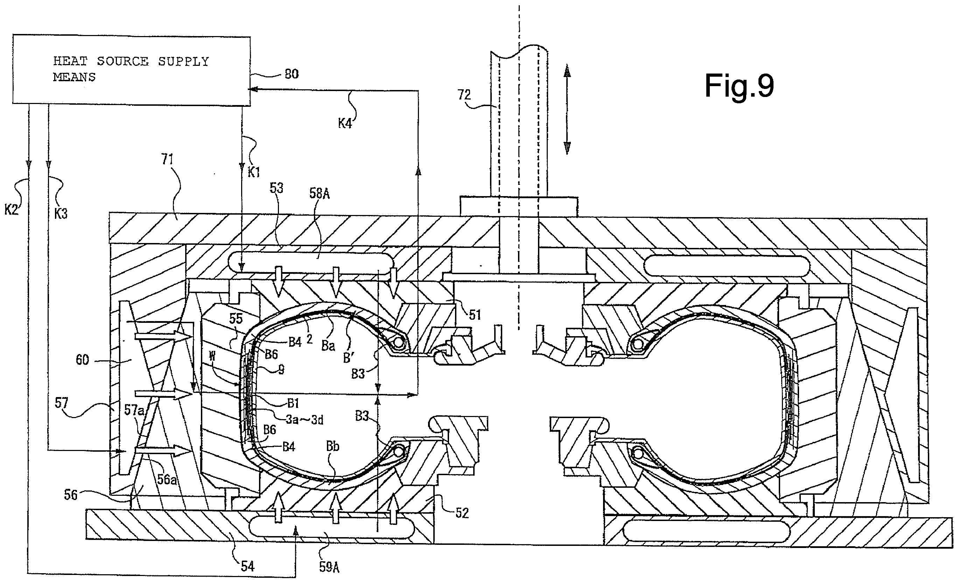

Conventionally, as shown in FIG. 9, the tread region W of a base tire B is formed as a thin-walled portion B1 without the addition of a tread rubber A.

This base tire B has a thin-walled portion B1 in which a carcass 2, a plurality of belts 3a to 3d, and a cover rubber 4 are placed in the same way as in a regular tire. And when used as a tire, the base tire B has a tread rubber A, which will become the tread of the tire, attached, in bonding or fusion, to the thin-walled portion B1 thereof, so that they can be structured integrally together.

The tire using this base tire B has the advantage that both the cushion performance of the base tire B and the wear performance of the tread rubber A on the road can be selected according to the user's preference.

Thus, the tire manufactured using a base tire B is regenerated in such a manner that when the tread rubber A is worn, the wearing surface on the tread rubber A is removed by buffing and a new tread rubber A is attached there into a single body.

To mold the base tire B, a method of curing and molding a green tire, which is a base tire having the tread region W as a thin-walled portion B1, is employed. And if necessary, a post-shaping is applied to the cure-molded base tire B by buffing the thin-walled portion B1.

For this cure-molding of the base tire B, a conventional curing machine used for the manufacture of a regular tire, as disclosed in Patent Document 2, is employed.

As shown in FIG. 10, this curing machine includes upper and lower molds 51 and 52 of ringed disk shape, which heat and mold both side regions Ba and Bb of a green tire B' on its side to become a base tire B, an upper platen 53, which supports and holds the top side of the upper mold 51, a lower platen 54, which supports and holds the bottom side of the lower mold 52, a tread mold 55, which consists of a plurality of divided tread molds arranged circumferentially to mold the tread region W of a tire, a plurality of tread segments 56, which slide radially on the lower platen 54 while supporting the outer periphery of the tread molds 55, an outer ring 57, which fixes the tread segments 56 in such a manner as to maintain a ring-shaped molding space, a moving means 72, which moves the outer ring 57 and the upper platen 53 upward, and a bladder 9, which is disposed inside the molds 51, 52, and 55 and inflated (swelled out) to pressure-mold the green tire B' from inside. The whole of the external sides of the upper mold 51, the lower mold 52, and the tread molds 55 is heated from outside by the upper platen (upper heating section) 53 and the lower platen (lower heating section) 54, which constitute a first heating means, and the outer ring (tread heating section) 57, which constitutes a second heating means.

The upper and lower platens 53 and 54, as the first heating means, and the outer ring 57, as the second heating means, are respectively provided with steam pathways 58A, 59A, and 60 formed therein to pass steam as the heating medium. These steam pathways 58A, 59A, and 60 are respectively connected to a common heat source supply means 80 via pressure-resistant, heat-insulated hoses or pipes. That is, high-temperature steam as the heating medium is circulated through the steam pathways 58A, 59A, and 60. Thus, a cure-molding is performed as the side regions Ba and Bb of the green tire B' are heated from outside via the upper and lower molds 51 and 52 by the heating of the upper and lower platens 53 and 54 and the tread region W of the green tire B' is heated from outside via the tread segments 56 and the tread molds 55 by the heating of the outer ring 57. In implementing the above structure, the upper and lower platens 53 and 54, the outer ring 57, etc., of the curing machine for molding a regular tire are used, and the other features are optimized in consideration of thicknesses in the neighborhood of the thick-rubbered bead regions B3, the tread rubber A, and the neighborhood of the shoulder portions B4 near the ends of the tread rubber. In this arrangement, the tread molds 55 are thick-walled for the molding of the thin-walled portion B1 of the base tire B, although they do not have a tread pattern formed as in the molding of a regular tire.

A green tire B' on its side is cure-molded by a curing machine of the above-described structure as follows. A green tire B', which will become a base tire, is first placed in a predetermined position on the lower mold 52. Then the outer ring 57 and the upper platen 53 are lowered together to have the inversely inclined surface 57a of the outer ring 57 engage with the inclined surface 56a of the tread segments 56, and a plurality of tread molds 55 are arranged in a ring. Then the upper mold 51 is fitted on, so that a molding space to shape the exterior of the green tire B' is formed by the upper and lower molds 51 and 52 and the plurality of tread molds 55.

Further, a bladder 9 is placed inside the green tire B'. Then the bladder 9 is swelled out by injecting a heating medium thereinto, so that the green tire B' is heated while it is pressured from inside in the direction of the molds . In addition, a heating medium, e.g., steam, is circulated through the steam pathways 58A, 59A, and 60 formed within the outer ring 57 and the upper and lower platens 53 and 54, thereby heating the green tire B' from both inside and outside. Thus heated, a curing is performed, and a new base tire B is molded.

However, with the conventional curing machine such as disclosed in Patent Document 2, especially the upper platen 53, the lower platen 54, the tread segments 56, and the like are designed for the cure-molding of regular tires, and the structural specifications of the machine are optimized in consideration of thicknesses in the neighborhood of the thick-rubbered bead regions B3, the tread rubber, and the neighborhood of the shoulder portions B4 near the ends of the tread rubber. Therefore, when the machine is applied to the molding of a base tire B whose tread region W is formed as a thin-walled portion B1, there arise greater chances of overcure of the belts 3a to 3d and carcass 2 in the tread region W and defective adhesion between the steel wires and rubber than in regular tires because of the thinness of the tread region W.

### PRIOR ART DOCUMENTS

Patent Document 1: Japanese Unexamined Patent Application Publication No. 8-258179
Patent Document 2: Japanese Unexamined Patent Application Publication No. 5-200754

Reference is also made to KR 2004-0064434, JP 11-165320, JP 2002-036243, EP 1172198, JP 10-193472, JP 7-195370, JP 2006-035615, JP 8-174554, JP 2005-238589, EP 1743755, JP 2006-035615 and JP 01-184106.

Reference is also made to US 4568259, which discloses a tire mold for curing pneumatic tires wherein the mold includes a mold back, a tread ring and an insulator plate located between the mold back and the tread ring. The insulator plate is made of material that has a lower thermal conductivity than the thermal conductivity of the material in the mold back or tread ring.

Reference is also made to JP 2002-172624, which discloses an apparatus for vulcanizing a large-size tire. The apparatus has a ring-shaped heating source jacket having a tapering inside surface which fits the tapering outside surface of sectors of the mold.

### SUMMARY OF THE INVENTION

### PROBLEMS TO BE SOLVED BY THE INVENTION

To solve the above-described problems, an object of the present invention is to provide a method for manufacturing a base tire ensuring a cure-molding of a green tire therefor without overcure or undercure in the shoulder portions of the thin-walled tread region and the bead regions, a curing machine that suitably enables the base tire manufacturing method, and a base tire thus manufactured.

### MEANS FOR SOLVING THE PROBLEM

In order to solve the aforementioned problems, the method for manufacturing a base tire of the present invention comprises the steps of: enclosing an outside of a green tire for a base tire that includes bead regions, side regions and a tread region formed as a thin walled portion, which is thinner than the thicknesses of the bead regions and the side regions, to be provided with a tread rubber within a curing mold; wherein: side regions of the green tire are heated by a first heating means; the side regions are heated by a second heating means which is divided into a plurality of parts which are provided to be spaced apart from each other so as to correspond to the shoulder portions at end sides of the tread region in the axial direction in the tread region, a portion of the second heating means that heats a middle portion of the tread region being thinned out so that the middle portion of the tread region is not directly heated; heat supplied to the shoulder portions of the tread region is conducted to the middle portion of the tread region; and a cure-molding is performed such that the amount of heat given to the tread region of the green tire by the second heating means is smaller than the amount of heat given to the side regions of the green tire by the first heating means.

According to this method, the tread region is heated by the second heating means divided into a plurality of parts which are spaced apart from each other in the axial direction along the tread region. Accordingly, the thin-walled tread portion is heated after the heating of the tread region from both end sides. Therefore, overcure in the tread region due to overheating can be prevented.

Further, the tread region is heated by the divided second heating means provided in positions corresponding to the shoulder portions. Accordingly, the thin-walled tread portion is heated after the heating of the thick-walled shoulder portions . Therefore, it is possible to prevent undercure in the shoulder portions and overcure in the tread region.

In still another method, the temperature of heating by the second heating means is set lower than the temperature of heating by the first heating means.

According to this method, for the same length of time of cure-molding, the temperature in the tread region heated by the second heating means will be lower than the temperature in the side regions heated by the first heating means. Therefore, for the same length of time of cure-molding, overcure in the tread region and undercure in the side regions can be prevented.

In still another method, a middle heating means for heating the middle portion of the tread region is provided within the second heating means, so that the amounts of heating by the middle heating means and the heating means provided in positions of the second heating means corresponding to the shoulder portions can be controlled.

According to this method, when a base tire is cured, overcure in the thin-walled portion of the tread region can be prevented by adjusting the amount of heat in the middle heating means . Also, when a regular tire is cured, the tread region can be cured by adjusting the amount of heating by the middle heating means such that it is the same as the amount of heating in the shoulder portions. Thus, overcure or undercure can be prevented easily by adjusting the amount of heating by the middle heating means according to the type of tire (base tire, regular tire, etc.) to be cured.

In still another method, a position control means capable of adjusting the position of the second heating means in the axial direction of the base tire is provided.

According to this method, the second heating means can be positioned in correspondence to the positions of the shoulders of the base tire to be cured. Hence, the base tires of varying shapes and sizes can be cured properly.

In still another method, a common heating medium is supplied to the first heating means and the second heating means.

According to this method, a common heating medium is supplied from a common heat source. Accordingly, overcure in the thin-walled portion can be prevented simply by adding minimal alterations to the existing curing machine.

In still another method, a low thermal conducting member is provided between the second heating means and the tread region.

According to this method, the amount of heat from the second heating means is conducted to the base tire through the medium of the low thermal conducting member, and thus the amount of heat from the second heating means is conducted with a time lag after the amount of heat from the first heating means is conducted. Accordingly, the time for curing the tread region will be shorter than the time for curing the side regions, and thus it is possible to prevent undercure in the side regions and overcure in the tread region.

In still another method, the amount of heat given by the second heating means is set to zero.

According to this method, the amount of heat given by the second heating means is zero, so that there is no direct heating of the tread region. As a result, curing of the base tire is done only with the amount of heat from the first heating means, and thus overcure in the tread region can be prevented.

In still another method, a third heating means is provided for heating the bead regions of the base tire.

According to this method, a third heating means is provided for heating the bead regions when the bead filler used to construct the bead region is an uncured rubber and therefore the wall thickness to be cured of the base tire is the thickest in the bead
regions. Thus, heat is directly supplied to the bead regions by the third heating means, so that the whole of the bead tire can be cured uniformly while undercure in the bead regions is prevented.

In still another method, the amount of heat given to the base tire is increasingly smaller for the bead regions, the side regions, and the tread region in this order.

According to this method, the amount of heat given to the base tire is increasingly smaller for the bead regions, the side regions, and the tread region in this order, so that the base tire can be cure-molded with a uniform degree of cure.

In another aspect of the invention to solve the aforementioned problems, a curing machine according to the invention comprises a curing mold for enclosing an outside of a green tire for a base tire that includes bead regions, side regions and a tread region formed as a thin walled portion, which is thinner than the thicknesses of the bead regions and the side regions, to be provided with a tread rubber; wherein the curing machine comprises: a first heating means for heating the side regions of the green tire to a first temperature; and a second heating means which is divided into a plurality of parts which are provided to be spaced apart from each other so as to correspond to the shoulder portions at end sides of the tread region in the axial direction in the tread region, a portion of the second heating means that heats a middle portion of the tread region being thinned out so that the middle portion of the tread region is not directly heated; the second heating means is configured to heat the shoulder portions at both ends of the tread region to a second temperature which is lower than the first temperature, heat supplied to the shoulder portions of the tread region being is conducted to the middle portion of the tread region, whereby the amount of heat given to the tread region is smaller than the amount of heat given to the side regions by the first heating means.

According to this aspect, in a cure-molding of a base tire, the amount of heat given to the tread region by the second heating means is smaller than the amount of heat given to the side regions by the first heating means. Therefore, the side regions of the base tire will be heated earlier with the result that the amount of heating in the tread region is smaller for the same length of curing time. Thus, it is possible to prevent overcure in the tread region of the base tire, which has been shaped in a thin wall.

The tread region is heated by the second heating means divided into a plurality of parts, which are disposed spaced apart from each other in the axial direction along the tread region. Accordingly, the thin-walled tread portion is heated after a heating from both end sides of the tread region. Therefore, overcure in the tread region due to overheating can be prevented.

According to this invention, a base tire featuring a uniform hardness can be obtained as the base tire is cured with a uniform degree of cure. Therefore, a tire with small rotational resistance can be manufactured when it is formed by attaching a tread to the base tire.

### BRIEF DESCRIPTION OF THE DRAWINGS

FIG. 1 is a cross-sectional view of a curing machine according to the first embodiment of the invention.
FIG. 2 is a diagram showing a temperature distribution on the mold surface according to the first embodiment of the invention.
FIG. 3 is a cross-sectional view of a curing machine according to the second embodiment of the invention.
FIG. 4 is a cross-sectional view of a curing machine according to the third embodiment of the invention.
FIG. 5 is a cross-sectional view of a mold section according to the fourth embodiment of the invention.
FIG. 6 is a cross-sectional view of another mold section according to the fourth embodiment of the invention.
FIG. 7 is a cross-sectional view of a curing machine according to the fifth embodiment of the invention.

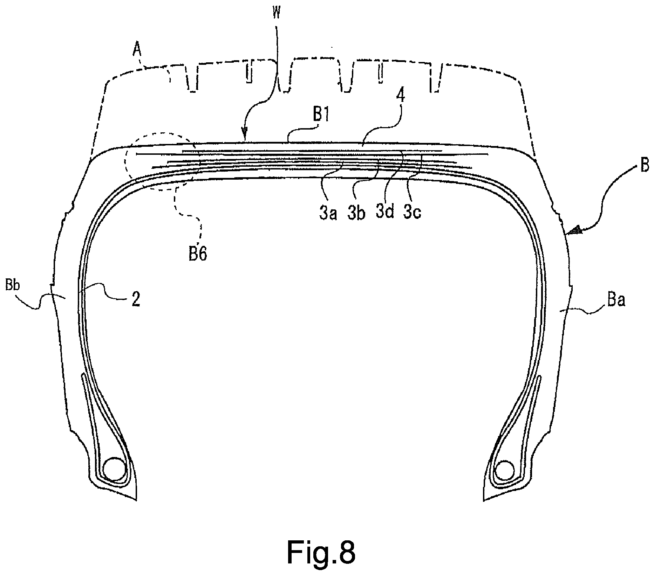

FIG. 8 is a cross-sectional view of a curing machine according to the fifth embodiment of the invention.
FIG. 9 is a schematic structural cross section of a base tire.
FIG. 10 is a cross-sectional view of a conventional curing machine

### BEST MODE FOR CARRYING OUT THE INVENTION

### First Embodiment

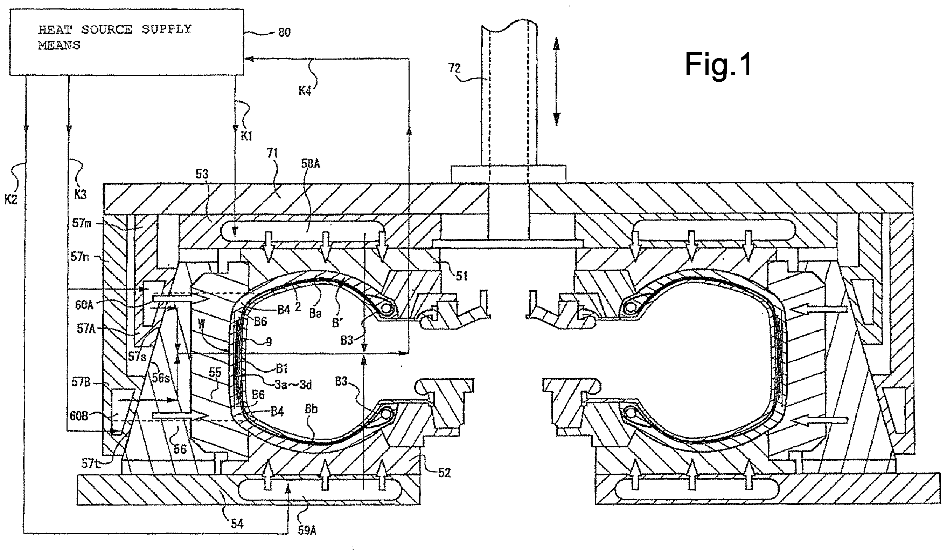

FIG. 1 shows a curing machine of a base tire according to a preferred embodiment of the present invention. Note that, in the figure, identical components, which are also found on the conventional curing machine, are given identical reference numerals and the repeated description thereof will be omitted as appropriate.

In FIG. 1, the reference numerals 51 and 52 denote an upper mold and a lower mold, which have each a ringed disk shape. The upper mold 51 is movable up and down relative to the lower mold 52. The upper mold 51 and the lower mold 52, in contact with the side regions Ba and Bb which are the sides of a green tire B' to be cured, not only cure the side regions Ba and Bb, but also emboss the tire size, serial number, and the like on the side surfaces of the base tire. The upper mold 51 and the lower mold 52 are respectively mounted to an upper platen 53 and a lower platen 54, which serve as a first heating means. Formed inside the upper platen 53 and the lower platen 54 serving as the first heating means are steam pathways 58A and 59A. As a heating medium, such as steam, from a heat source supply means 80 to be discussed later is circulated through the steam pathways 58A and 59A, the side regions of the green tire B' are heated and the inner surface temperatures of the upper mold 51 and the lower mold 52 are raised to predetermined temperatures required for curing.

The reference numeral 55 denotes tread molds, which consist of a plurality, e.g., 12, of divisions along the circumference of the green tire B'. The tread molds are ring-shaped as a whole and are disposed concentrically with the green tire B' between the upper mold 51 and the lower mold 52.

When the tread molds 55 are disposed in a ring, the inner peripheral surfaces thereof will come in contact with the outer peripheral surface, or the tread region W, of the green tire B' to be cured. And mounted on the outer peripheral side thereof are tread segments (hereinafter referred to as segments) 56, respectively.

Thus, the green tire B', which will become a base tire B, can be cure-molded with the tread region W and the side regions Ba and Bb thereof enclosed within the upper mold 51, the lower mold 52, and the tread molds 55.

The segments 56 are movable along the radially formed grooves in the top surface of the lower platen 54 serving as the first heating means. With each of the segments 56 moving along the groove, the molding space formed by a plurality of tread molds 55 is expanded or contracted. An inclined surface 56s is formed on the outer periphery of the segment 56, and when the segments 56 are arranged in a ring, the inclined surfaces 56s form tapered curved surfaces continuously.

A first outer ring 57A and a second outer ring 57B, serving as the second heating means, have each an inversely curved surface facing the tapered curved surface of the group of segments 56 and are each divided into a plurality, two in this example, of parts. They are disposed outside the segments 56, axially spaced apart from each other in the tread region.

That is, the inversely inclined surfaces 57s and 57t facing the inclined surface 56s on the outer periphery of the segment 56 are formed on the inner periphery of the first outer ring 57A and the second outer ring 57B, respectively. They form an inversely tapered curved surface facing the tapered curved surface formed by the segments 56.

The smaller-diameter first outer ring 57A and the larger-diameter second outer ring 57B, serving as the second heating means, are fixed, on the top side thereof, to a ring locking platen 71 of a flat disk shape via the arms 57m and 57n. And as a moving means 72 attached to the center of the ring locking platen 71 moves up or down, the first outer ring 57A and the second outer ring 57B move up or down together with the ring locking platen 71. This expands or contracts the molding space formed by the tread molds 55 and also prevents the tread molds 55 from spreading wider in diameter at the time of curing.

Provided inside the first outer ring 57A and the second outer ring 57B as the second heating means are steam pathways 60A and 60B which are each formed in a ring along the inner periphery thereof. The first outer ring 57A, provided with the steam pathway 60A formed in a ring shape, is disposed in a radially outer position corresponding to one of the shoulder portions B4 of the tread molds 55, thereby heating this section of the tire. The second outer ring 57B as the second heating means, provided with the steam pathway 60B formed in a ring shape, is disposed in a radially outer position corresponding to the other of the shoulder portions B4 of the tread molds 55, thereby heating this section of the tire.

In the present embodiment, the upper platen 53 and the lower platen 54, serving as the first heating means, constitute the upper and lower heating sections for heating both the upper and lower side regions of the green tire B'. The first outer ring 57A and the second outer ring 57B, serving as the second heating means, constitute the shoulder heating sections for heating both of the shoulder portions B4, B4 on the tread region side of the tread molds 55. These heating sections (upper platen 53, lower platen 54, first outer ring 57A, second outer ring 57B) constitute the first and second heating means.

The steam pathways 58A, 59A, 60A, 60B in the upper and lower platens 53 and 54, the first outer ring 57A, and the second outer ring 57B are connected to the heat source supply means 80 by their respective heat-insulated high-pressure tubes (not shown) or the like. With steam circulated through these steam pathways 58A, 59A, 60A, 60B, the heat of the steam is conveyed to the tread region W of the base tire B via the segments 56 and the tread molds 55. And the respective regions of the tire are heated to temperatures necessary for curing, and the temperatures are maintained for a predetermined period of time.

As indicated by the arrows K1, K2, and K3, the steam discharged from the heat source supply means 80 is passed through the upper platen 53, the lower platen 54, the first outer ring 57A, and the second outer ring 57B, respectively, and then sent back to the heat source supply means 80 as indicated by the arrow K4.

Thus, the amount of heat given to the tread region by the first outer ring 57A and the second outer ring 57B will be smaller than the amount of heat given to the side regions by the upper and lower platens 53 and 54, even if the steam having the same amount of heat from the heat source supply means 80 is supplied to the upper and lower platens 53, 54 as the first heating means and the first outer ring 57A and the second outer ring 57B as the second heating means. Accordingly, it is possible to prevent both the undercure in the side regions and overcure in the tread region.

Using a curing machine of a structure as described above, a green tire B' is molded into a base tire B as follows.

A green tire B' molded in a preceding process is set in a predetermined position such that the side region Bb comes in contact with the lower mold 52 in the curing machine 1. Then the first outer ring 57A and the second outer ring 57B, as the second heating means, are lowered together with the ring locking platen 71, thereby contracting the diameter of the plurality of tread molds 55 and having them come in contact with the tread region W of the green tire B'. At the same time, the upper mold 51 is lowered to have the upper and lower molds 51 and 52 come in contact with the side regions Ba and Bb, thereby forming a molding space in which the green base tire B' is cure-molded. At this time, the steam pathways 60A and 60B in the first outer ring 57A and the second outer ring 57B are located in positions corresponding to the shoulder portions B4, B4 of the green tire B', respectively.

In this state, a high-temperature steam whose predefined temperature is 150 to 200°C is circulated through steam pipes from the heat source supply means 80, e.g., a steam tank, supplying steam as the heating medium, to the steam pathways 58A, 59A, 60A, 60B in the upper and lower platens 53 and 54, as the first heating means, and the first and second outer rings 57A and 57B, as the second heating means. As a result, the green base tire B' is heated from outside via the upper and lower molds 51 and 52 and the segments 56 and the tread molds 55. At the same time, a bladder 9 disposed on the inner side of the green tire B' is inflated by a heating medium or the like, thereby heating and giving pressure to the green tire B' from inside. Thus, the green tire B' is cured and molded into a new base tire.

In other words, a green tire B' with the tread region W having been molded in a thin wall is first enclosed within the upper and lower molds 51 and 52 and the tread molds 55. Then steam is supplied from the heat source supply means 80 to the steam pathways 58A and 59A in the upper and lower platens 53 and 54 for heating the upper and lower molds 51 and 52 and to the steam pathways 60A and 60B in the first and second outer rings 57A and 57B for heating the tread molds 55 in positions facing the pair of the shoulder portions B4, B4 of the base tire. Thus the upper and lower molds 51 and 52 and the tread molds 55 are heated. As a result, the amount of heat given to the tread region W, which is heated by the first and second outer rings 57A and 57B via the tread molds 55, becomes smaller than the amount of heat given to the side regions Ba, Bb, which are heated by the upper and lower platens 53 and 54 via the upper and lower molds 51 and 52. And this will achieve a generally uniform degree of cure in the cure-molded base tire.

That is, the second heating means for heating the tread region are divided into the first and second outer rings 57A and 57B, which correspond to the pair of the shoulder portions B4, B4 of the base tire. This results in making the amount of heat for heating the tread region W of the base tire smaller than the amount of heat for heating the side regions Ba, Bb thereof.

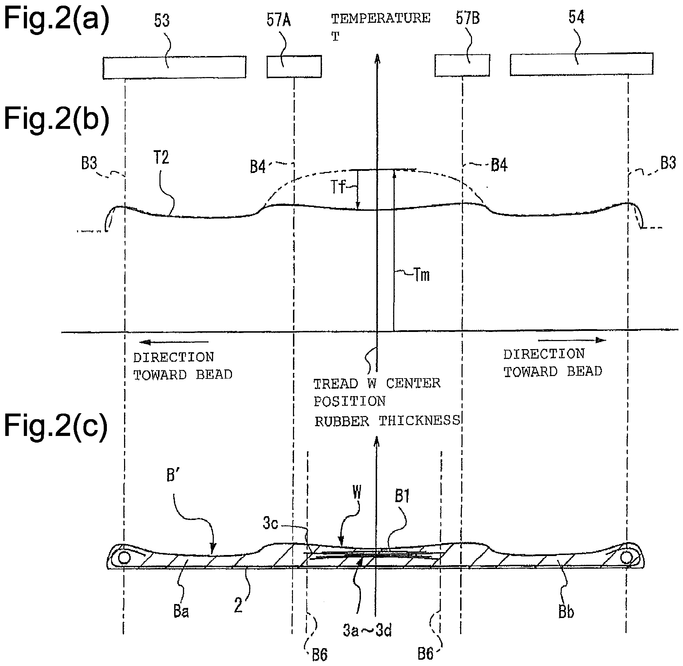

FIG. 2 is a developed view (FIG. 2B) showing a temperature distribution T2 on the inner side of the upper mold 51, the tread molds 55, and the lower mold 52 when the upper platen 53, the first outer ring 57A, the second outer ring 57B, and the lower platen 54 (FIG. 2A) as the first and second heating means are heated. It is a temperature distribution desirable for the curing of a green tire B' for the base tire (developed view) of FIG. 2C.

That is, the temperature distribution T2 is such that in the middle position (between shoulder portions B4, B4) of the tread region W, the first outer ring 57A and the second outer ring 57B are in contact with the segments 56 in small area and narrow width and are disposed in positions corresponding to the shoulder portions B4, B4. As a result, the temperature is lower than the temperature Tm by a difference of Tf because of the thermal conduction of the amounts of heat supplied by the outer rings 57A and 57B.

In other words, direct heating is thinned out in the middle section between the first and second outer rings 57A and 57B, so that there is little conduction of heat supplied from this part. Accordingly, the temperature for the tread region W is set to a level a little (Tf) lower than the temperature Tm, which is the temperature suited to the curing of the thin-walled portion B1.

It is to be noted that the upper and lower platens 53 and 54, as with the conventional type, are disposed in positions corresponding to the side regions Ba and Bb of the tire. Therefore, the amounts of heat supplied are the same, and there is no drop of temperature in the temperature distribution T2. Hence, no undercure occurs in the side regions Ba and Bb.

That is, when the green tire B' is molded, the middle position of the tread region W is heated by the thermal conduction of the amounts of heat supplied from the shoulder portions B4, B4 of the tread region W. Therefore, it is possible to prevent not only overcure in the middle position of the thin-walled tread region W, but also overcure in the end portions of the belt 3c, which are the thinnest-walled near the belt end portions B6.

Also, the thick-walled bead regions B3, B3 are heated from the upper and lower platens 53 and 54, as with the conventional machine, so that undercure in the bead regions B3, B3 can be prevented. That is, the first and second outer rings 57A and 57B as the second heating means for heating the tread region W are disposed in positions corresponding to the shoulder portions B4, B4. This allows the switching from the molding of a regular tire to the molding of a base tire B simply by changing the outer rings for the existing curing machine. This can be done with minimal equipment investment.

It should be understood that the second heating means described in the foregoing embodiment is not limited to one divided into two, namely, the first and second outer rings 57A and 57B, but may be one divided into more than two parts for the control of the amount of heating for the tread region.

### Second Embodiment

In the first embodiment, it has been described that the outer rings 57A and 57B as the second heating means consist of a plurality of (two) divisions, and the steam pathways 60A and 60B are formed independently inside the outer rings 57A and 57B, respectively. However, the steam pathways 60A and 60B may be formed separately within a single outer ring 57, spaced apart from each other in the axial direction in the tread region.

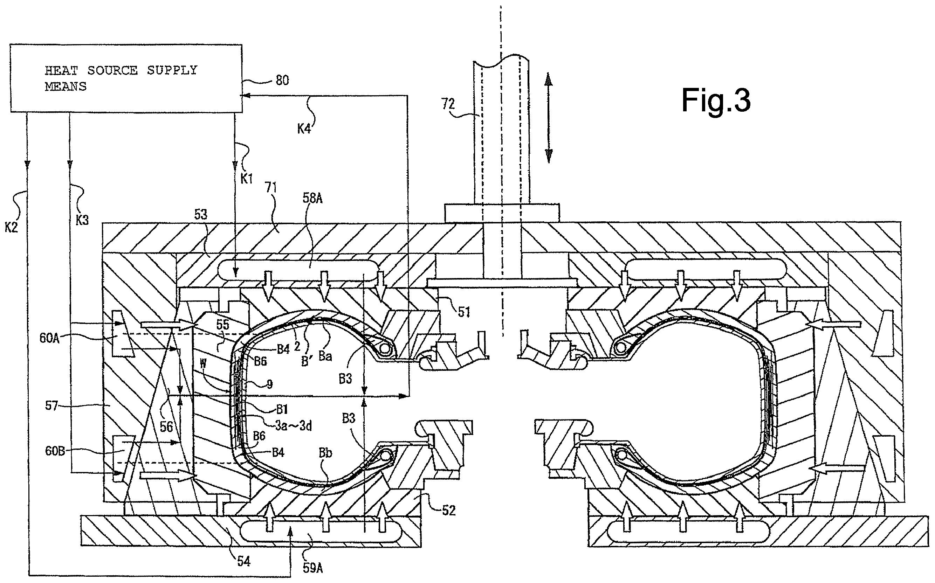

For example, as shown in FIG. 3, the steam pathway 60A may be formed in a position facing the shoulder portion B4 on the upper mold 51 side, and the steam pathway 60B in a position facing the shoulder portion B4 on the lower mold 52 side, within the outer ring 57 as the second heating means.

In other words, the upper platen 53 and the lower platen 54 are structured as the upper and lower heating sections serving as the first heating means for heating the upper and lower sides of the green tire B'. The outer ring 57 is structured as the shoulder heating section serving as the second heating means for heating the shoulder portions B4,B4 on both sides of the tread mold 55. Thus these heating sections (upper platen 53, lower platen 54, outer ring 57) constitute the first and second heating means. In a structure like this, too, the heating temperature for the middle position of the tread region can be set lower than the heating temperature of the second heating means facing the shoulder positions of the tread region. As a result, the same advantageous effect as in the first embodiment can be obtained.

### Third Embodiment

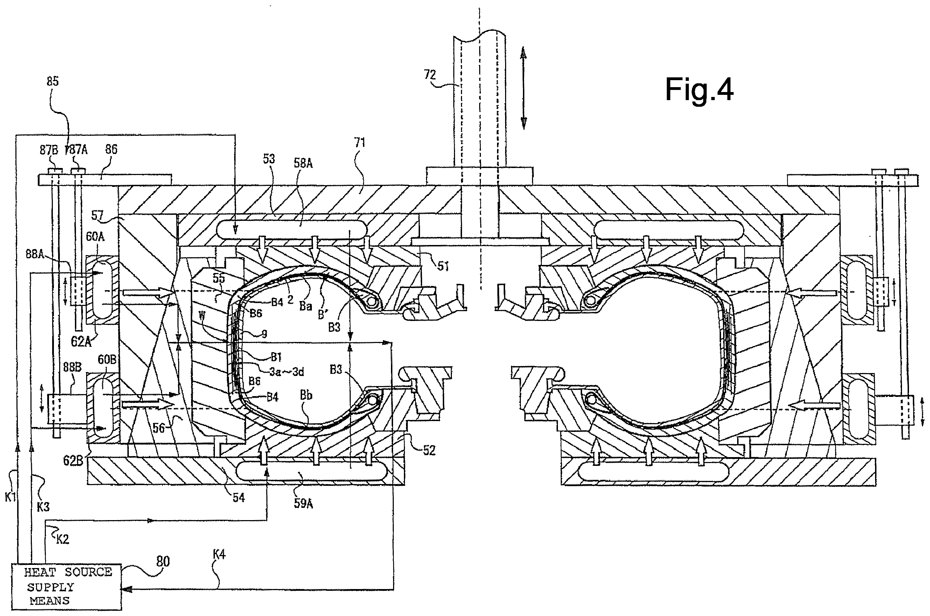

In the first and second embodiments, it has been described that steam pathways are formed inside the outer ring as the second heating means. However, as shown in FIG. 4, the steam pathways 60A and 60B may be provided outside the outer ring 57.

That is, the curing machine according to this embodiment is nearly of the same structure as that of the first and second embodiments and differs only in that the steam pathways 60A and 60B are disposed on the outer periphery of the outer ring 57 as the second heating means, and at the same time a position control means 85 is provided that controls the positions of the steam pathways 60A and 60B in such a manner that they are axially spaced apart from each other along the tread region.

In this embodiment, the outer ring 57, which is solidly formed, performs the roles of controlling the expansion and contraction of the tread molds 55, resisting the forces for expanding the diameter of the tread molds 55 at the time of molding, and conducting the heat from the steam pathways 60A and 60B provided on the outer periphery thereof.

More specifically, as shown in FIG. 4, the steam pathways 60A and 60B are, for instance, formed respectively inside a first heating ring 62A and a second heating ring 62B, which are provided on the outer periphery of the outer ring 57 and slide along the outer periphery in the axial direction of the tire (vertical direction of the curing machine 1) for positional adjustment.

The first heating ring 62A and the second heating ring 62B are formed of a high thermal conducting material, such as copper, and have a heat-transfer surface formed thereon for close contact with the outer periphery of the outer ring 57. Provided on the outside of the first heating ring 62A and the second heating ring 62B is the position control means 85 which can adjust the positions thereof individually.

In structuring the position control means 85, stays 86, which extend outward from the top surface of the ring locking platen 71 fixing the outer ring 57, are disposed at a plurality of radially equally-spaced positions, and positioning bolts 87A and 87B are passed through the stays 86 and screwed into nuts 88A and 88B which are fixed to the outer peripheries of the first heating ring 62A and the second heating ring 62B, respectively.

According to the present embodiment, therefore, the upper platen 53 and the lower platen 54 constitute the first heating means for heating the upper and lower side regions of the green tire B'. The outer ring 57 and the first heating ring 62A and the second heating ring 62B provided on the outer periphery of the outer ring 57 constitute the second heating means for heating the shoulder portions B4, B4 on both sides of the tread mold 55.

With the above-described structure implemented, turning the positioning bolts 87A and 87B will move the first heating ring 62A and the second heating ring 62B up or down over the outer periphery of the outer ring 57 relative to the positions of the shoulder portions B4 of the green tire B' to be cured. Therefore, even when the base tire of a different size is to be cured, it is possible to carry out the heating of the base tire at optimum positions for the shoulder portions B4, B4 thereof. Thus, the occurrence of defective curing in the thin-walled portion B1 of the tread region W or the like can be prevented.

### Fourth Embodiment

In the first and second embodiments, it has been described that steam pathways are formed inside the outer ring as the second heating means. And in the third embodiment, it has been described that the steam pathways are provided outside the outer ring 57 as the second heating means. However, in this embodiment, those steam pathways are formed such that a difference in heating can be achieved between the shoulder portions B4, B4 of the tread region W and the middle portion thereof and further the heating temperature for the middle portion in the tread region W is set lower than the heating temperature for the shoulder portions B4, B4 of the tread region W.

More specifically, the tread molds 55, as described in the first to third embodiments, may be made of stainless steel or the like, which is a lower thermal conducting material than cast iron or the like of which the upper and lower molds 51 and 52 are made. Thus differences in heating routes when the green tire B' is cured can be created.

That is, the side regions Ba and Bb of the green tire B' is heated earlier than the tread region W thereof by the upper and lower molds 51 and 52, made of cast iron or the like featuring a better thermal conductivity, which are heated by the upper and lower platens 53 and 54. At this time, although the tread molds 55 are heated not only from outside by the segments 56 but also from the upper and lower sides by the conduction of heat of the upper and lower molds 51 and 52, the temperature rise is smaller because they are made of stainless steel whose thermal conductivity is lower than that of cast iron.

That is, curing of the green tire B' progresses from the side regions Ba and Bb. And along with the progress of curing, the shoulder portions B4, B4 are gradually heated not only from the side regions Ba and Bb but also slowly from the tread molds 55, so that overcure in the middle portion of the thin-walled portion B1 of the tread region W can be prevented.

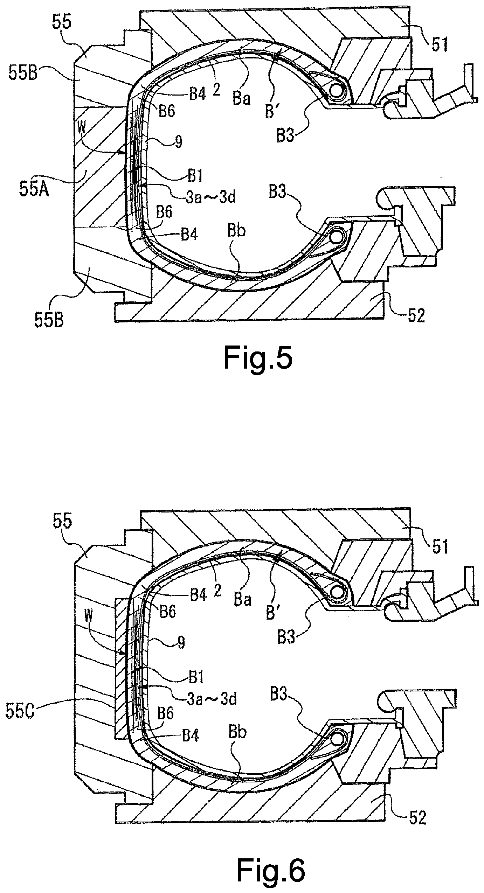

In this example, the tread molds 55 are made of stainless steel as low thermal conducting material. However, as shown in FIG. 5, the tread mold 55 may, for instance, be constituted of cast iron portions 55B and a stainless steel portion 55A, which are members providing partially differing thermal conductivity. In this manner, the heating temperature for the middle portion of the tread region W may be set lower than the heating temperature of the heating means corresponding to the shoulder portions B4 of the tread region W.

Also, as shown in FIG. 6, a member 55C, made of stainless steel or the like featuring a lower thermal conductivity than that of the tread mold 55, may be provided on the surface of the tread mold 55 that will come in contact with the tread region W of the green tire B'. The member 55C may, for example, be formed in the width of the belt 14 and disposed in such a manner as to cover the tread region W of the green tire B' circumferentially. Then the heating progresses from the shoulder regions B4, B4 in contact with the tread molds 55, so that overcure in the middle position of the thin-walled portion B1 of the tread region W can be prevented.

As described above, the steam pathways 60A and 60B of the second heating means are provided and steam as the heating medium is supplied from a common heat source supply means 80, so that the amount of heating by the second heating means facing the shoulder positions B4, B4 of the tread region W can be set smaller than the amount of heating by the first heating means facing the side regions and the heating temperature for the middle position of the tread region W may be set low. Because of this arrangement, it is only necessary to change the outer ring as the heating means of the curing machine. Thus, a new base tire can be manufactured without defective curing while maintaining low equipment cost. Further, the tread molds 55 may be made of a low thermal conducting material whose thermal conductivity is lower than that of the upper and lower molds 51 and 52, in addition to the use of the steam pathways 60A and 60B of the second heating means. Thus, the heating temperature for the middle portion of the tread region can be set lower than the heating temperature of the heating means corresponding to the shoulder positions of the tread region.

In the foregoing first to fourth embodiments, the arrangement has been such that the amount of heat given to the tread region W by the second heating means is set smaller than the amount of heat given to the side regions Ba and Bb by the upper and lower platens 53 and 54. However, the green tire B' may be cured by setting the amount of heat given to the green tire B' by the second heating means to zero. That is, while the second heating means does not heat the tread molds 55, the heat is conducted to the tread molds 55 from the upper and lower molds 51 and 52 that are heated by the upper and lower platens 53 and 54. As a result, there occurs a time difference in the curing of the side regions Ba and Bb and the tread region W of the green tire B' such that it is possible to prevent undercure in the side regions Ba and Bb and the bead regions B3, B3 and overcure in the tread region W.

Even if the amount of heat given to the green tire B' by the second heating means is set to zero, curing takes place as the heat in the side regions Ba and Bb heated by the upper and lower platens 53 and 54 is conducted to the tread region W. Since the tread region W contains belts 3a to 3d, which are excellent thermal conductors, the heat in the side regions Ba and Bb is conducted easily through the belts 3a to 3d and the residual heat in the belts 3a to 3d promotes curing.

### Fifth Embodiment

In the foregoing first to third embodiments, the steam pathways as the second heating means are arranged in positions corresponding to the shoulder portions B4, B4 of the tread region W, so that there occurs a difference in the amount of heating between the shoulder portions B4, B4 and the middle portion between the shoulder portions B4, B4. In the fourth embodiment, in addition to the structure of the first to third embodiments, the arrangement is such that the amount of heat for heating the middle portion of the tread region W is set lower than the amount of heat for heating the shoulder positions B4, B4 of the tread region W. For example, the tread mold 55 is constituted by cast iron portions 55B and a stainless steel portion 55A, the cast iron portions 55B disposed in positions corresponding to the shoulder positions B4, B4 and the stainless steel portion 55A disposed in a position corresponding to the middle portion. Thus, by arranging the members with different thermal conductivities, the temperature for heating the middle portion is set lower than the temperature for heating the shoulder positions B4, B4. The fifth embodiment differs in that a third heating means for heating the bead regions B3, B3 is added to the first embodiment. Note that structures identical to those of the first embodiment are omitted in the following description.

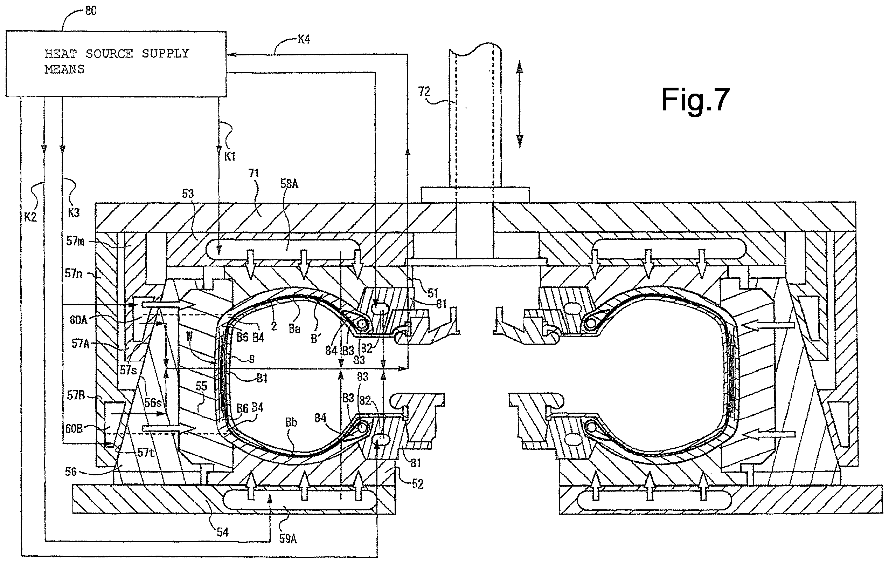

As shown in FIG. 7, the curing machine according to the fifth embodiment is structured such that steam pathways 82, 82 along the bead regions B3, B3 are formed within the bead rings 81 for cure-molding the bead regions B3, B3 of the green tire B'. And heating and curing are performed by preferentially supplying an amount of heat to the bead regions B3, B3 as the bead rings 81 are heated with steam from the heat source supply means 80 circulated through the steam pathways 82, 82.

In this embodiment, a green tire B' which will become a base tire is cured as follows. As the steam supplied from the heat source supply means 80 is circulated through the steam pathways 58A and 59A in the upper and lower platens 53 and 54 as the first heating means, the steam pathways 60A and 60B in the first and second outer rings 57A and 57B as the second heating means, and the steam pathways 82 in the bead rings 81 as the third heating means, the bead regions B3, B3 of the green tire B' are first heated by the bead rings 81. Next, the side regions Ba and Bb are heated by the heat of the upper and lower molds 51 and 52 heated by the upper and lower platens 53 and 54, and then the tread region W is heated by the heat of the first and second outer rings 57A and 57B via the segment 56 from the positions facing the shoulder portions B4, B4 of the tread mold 55.

More specifically, the bead regions B3, B3 of the green tire B' are first heated because they are in direct contact with the bead rings 81 and the heat of the bead rings 81 is immediately conducted therethrough. The side regions Ba and Bb are subject to heating with the heat of the upper and lower platens 53 and 54 conducted through the upper and lower molds 51 and 52, and therefore they are heated after a delay of time taken for the heating of the upper and lower molds 51 and 52 after the heating of the bead regions B3, B3. The tread region B1, which is subject to heating with the heat of the first and second outer rings 57A and 57B conducted through the segment 56 and the tread mold 55, is heated after a delay of time taken for the heating of the segment 56 and the tread mold 55 after the heating of the side regions Ba and Bb.

In other words, the time span for heating the green tire B' is increasingly longer for the tread region W, the side regions Ba and Bb, and the bead regions B3, B3 in this order. As a result, the amount of heat given is increasingly smaller for the bead regions B3, B3, the side regions Ba and Bb, and the tread region W in this order. This order of the amounts of heat given is the reverse of the one for the cure-molding of the green tire B' together with the tread.

Thus, the heating of the green tire B' begins with the bead regions B3, B3 by the bead rings 81, and initially the bead regions B3, B3 only are heated until the upper and lower molds 51 and 52 and the tread molds 55 are heated. During the period until the heat of the upper and lower platens 53 and 54 is conducted to the surface of the side regions Ba and Bb, the upper and lower molds 51 and 52 are heated by the adjacent bead rings 81, and the side regions Ba and Bb in contact with the upper and lower molds 51 and 52 are heated from the side of the bead regions B3, B3. And when the heat of the upper and lower platens 53 and 54 is conducted to the surfaces of the upper and lower molds 51 and 52 in contact with the side regions Ba and Bb, the entirety of the side regions Ba and Bb is heated. During the period until the heat of the first and second outer rings 57A and 57B is conducted to the surface of the tread region W, the tread molds 55 are heated by the heat of the adjacent upper and lower molds 51 and 52, and the tread region W in contact with the tread molds 55 is heated from both ends of the tread region W. And as the heat of the first and second outer rings 57A and 57B is conducted to the surface in contact with the tread region W, the tread region W is heated preferentially from both ends thereof.

Also, along with the heating of the molds 51, 52, and 55, the green tire B' is heated and pressurized from inside as the bladder 9 disposed therein is inflated by a heating medium or the like. Thus, the green tire B' is cure-molded into a new base tire.

By implementing the structure of the curing machine as described in the fifth embodiment, the green tire B' is cured in the sequence of the bead regions B3, B3, the side regions Ba and Bb, and the tread region W. As a result, the bead regions B3, B3 of the green tire B', which is the thickest-walled, the side regions Ba and Bb, which are thinner walled than the bead regions B3, B3, and the tread region W, which is the thinnest-walled, are cured with a substantially uniform degree of cure.

Also, provision of the third heating means for heating and curing the bead regions B3, B3 makes it possible to prevent not only undercure in the bead regions B3, B3 but also overcure in the tread region W even when the bead filler 84, made of an uncured rubber, is placed together with the bead core 83 in the bead regions B3, B3 of the green tire B'.

Also, although the steam pathway 82 as the third heating means is provided within the bead ring 81 as described herein, the arrangement may also be such that the third heating means is provided in the vicinity of the bead regions B3, B3 within the upper and lower molds 51 and 52.

In the fifth embodiment, the third heating means is added to the structure of the curing machine according to the first embodiment. However, it should be appreciated that the aforementioned advantageous effects can be obtained by combination with the second to fourth embodiments as well.

Also, the amounts of heat given by the first heating means and the second heating means may be set to zero, and curing may be carried out in such a manner that the amount of heat given to the green tire B' is increasingly smaller for the bead regions B3, B3, the side regions Ba and Bb, and the tread region W in this order.

That is, the amounts of heat given to the green tire B' by the first heating means and the second heating means are set to zero, so that the green tire B' is heated by the third heating means only. And the amount of heat given to the green tire B' by the third heating means is conducted through the bead regions B3, B3, the side regions Ba and Bb, and the tread region W in this sequence. Thus the green tire B' is cured using the setting such that the amount of heat given to the green tire B' is increasingly smaller for the bead regions B3, B3, the side regions Ba and Bb, and the tread region W in this order.

If a curing is performed using the setting such that the amount of heat given to the green tire B' is increasingly smaller for the bead regions B3, B3, the side regions Ba and Bb, and the tread region W in this order, then the curing will progress through the bead regions B3, B3, which are thick-walled, the side regions Ba and Bb, which are thinner-walled than the bead regions B3, B3, and the tread region W, which is thinner-walled than the side regions Ba and Bb, in this sequence. As a result, the cured base tire displays a uniform degree of cure. Even when the amounts of heat given by the first heating means and the second heating means are set to zero, the side regions Ba and Bb can be cured on account of the conduction of heat of the bead regions B3, B3 which are heated by the heat of the third heating means. Also, the tread region W allows the conduction of heat from the side regions Ba and Bb through the belts, which are excellent thermal conductors, and is cured by the residual heat in the belts. That is, by curing the green tire B' by the heat of the third heating means, a uniform degree of cure can be achieved by preventing undercure in the bead regions B3, B3 and overcure in the tread region W. In particular, this is a preferred curing method when the bead filler to be used in the bead regions B3, B3 of the green tire B' is uncured.

As described above, if a cure-molding of a green tire B' is performed using a curing machine as described in the first to fifth embodiments such that the amount of heat for heating the tread region W of the green tire B' by the second heating means is set smaller than the amount of heat for heating the side regions Ba and Bb thereof by the first heating means, it is possible to prevent overcure in the tread region W and undercure in the thick-walled bead regions B3, B3. That is, the base tire cure-molded by the above-mentioned machine features a uniform degree of cure in all of the bead regions B3, B3, the side regions Ba and Bb, and the tread region W.

In the foregoing embodiments, it has been described that the heating medium for heating the tread region W is supplied from a common heat source supply means 80, but the arrangement may be such that the neighborhoods of the shoulder portions B4 are locally heated by electrically-heated wires or the like.

Also, it has been described that the steam pathways 60A and 60B are provided as circumferentially continuous flow channels corresponding to the shoulder portions B4, B4 of the green tire, but the steam pathways may be circumferentially divided into a plurality of parts. The point is, such an arrangement is permissible so long as it allows heating such that the heating temperature for the middle position of the tread region is lower than the heating temperature of the heating means corresponding to the shoulder portions B4, B4 of the tread region.

Also, in the first to fifth embodiments, when a cured bead filler is used in the bead regions B3, B3 of the green tire B' , supply of steam to the upper and lower platens 53 and 54 only from the heat source supply means 80 will supply an amount of heat to the upper and lower molds 51 and 52 only. And with the amount of heat of the upper and lower molds 51 and 52 conducted to the tread molds 55 and the bead rings 81, the tread region W and the bead regions B3, B3, which have a thinner thickness to be cured, can be cured from the side regions Ba and Bb of the green tire B', so that a uniform degree of cure can be achieved for the green tire B' .

Also, stainless steel has been cited as an example of low thermal conducting material, but the material may be admissible if it is of lower thermal conduction than that of the upper and lower molds 51 and 52. Also, the location of the material is not limited to the tread mold 55, but the material may be applied to the segment 56, the outer ring 57, and the like.

As thus far explained, a base tire featuring a uniform hardness can be obtained by cure-molding the base tire to have a uniform degree of cure using a machine as described in the first to fifth embodiments. Therefore, a tire with small rotational resistance can be manufactured when it is formed by attaching a tread to the base tire.

In the foregoing specification, the invention has been described with reference to specific embodiments thereof. However, the technical scope of this invention is not to be considered as limited to those embodiments. It will be evident that various modifications and changes may be made thereto without departing from the scope of the invention.

### [Description of Reference Numerals]

- 2: carcass
- 3a - 3d: belt
- 4: cover rubber
- 9: bladder
- 51: upper mold
- 52: lower mold
- 53: upper platen
- 54: lower platen
- 55: tread mold
- 56: tread segment
- 57; 57A; 57B: outer ring
- 58A; 59A; 60; 60A; 60B: steam pathway
- A: tread rubber
- B: base tire
- Ba; Bb: side region
- B1: thin-walled portion
- W: tread region

## Claims

1. A method for manufacturing a base tire (B), comprising the steps of:
enclosing an outside of a green tire for a base tire (B) that includes bead regions (B3), side regions (Ba, Bb) and a tread region (W) formed as a thin walled portion, which is thinner than the thicknesses of the bead regions (B3) and the side regions (Ba, Bb), to be provided with a tread rubber within a curing mold; wherein:
side regions (Ba, Bb) of the green tire (B) are heated by a first heating means (58A, 59A);
the side regions (Ba, Bb) are heated by a second heating means (60A, 60B) which is divided into a plurality of parts which are provided to be spaced apart from each other so as to correspond to the shoulder portions (B4) at end sides of the tread region (W) in the axial direction in the tread region (W), a portion of the second heating means (60A, 60B) that heats a middle portion of the tread region being thinned out so that the middle portion of the tread region (W) is not directly heated;
heat supplied to the shoulder portions (B4) of the tread region is conducted to the middle portion of the tread region (W) ; and
a cure-molding is performed such that the amount of heat given to the tread region (W) of the green tire by the second heating means (60A, 60B) is smaller than the amount of heat given to the side regions (Ba, Bb) of the green tire by the first heating means (58A, 59A).

2. The method for manufacturing a base tire (B) as recited in claim 1, wherein the temperature of heating by the second heating means (60A, 60B) is set lower than the temperature of heating by the first heating means (58A, 59A).

3. The method for manufacturing a base tire (B) as recited in claim 1 or claim 2, wherein a middle heating means (60C) for heating the middle portion of the tread region (W) is provided within the second heating means (60A, 60B), so that the amounts of heating by the middle heating means (60C) and the heating means provided in positions of the second heating means (60A, 60B) corresponding to the shoulder portions can be controlled.

4. The method for manufacturing a base tire (B) as recited in any of claims 1 to 3, wherein a position control means capable of adjusting the position of the second heating means (60A, 60B) in the axial direction of the base tire (B) is provided.

5. The method for manufacturing a base tire (B) as recited in any of claims 1 to 4, wherein a common heating medium is supplied to the first heating means (58A, 59A) and the second heating means (60A, 60B).

6. The method for manufacturing a base tire (B) as recited in any of claims 1 to 5, wherein a low thermal conducting member is provided between the second heating means (60A, 60B) and the tread region (W).

7. The method for manufacturing a base tire (B) as recited in any of claims 1 to 6, wherein the amount of heat given by the second heating means (60A, 60B) is zero.

8. The method for manufacturing a base tire (B) as recited in any of claims 1 to 7, wherein a third heating means (82) is provided for heating the bead regions (81) of the base tire (B).

9. The method for manufacturing a base tire (B) as recited in claim 8, wherein the amount of heat given to the base tire (B) is increasingly smaller for the bead regions (81), the side regions (Ba, Bb), and the tread region (W) in this order.

10. A curing machine, comprising:
a curing mold for enclosing an outside of a green tire for a base tire (B) that includes bead regions (B3), side regions (Ba, Bb) and a tread region (W) formed as a thin walled portion, which is thinner than the thicknesses of the bead regions (B3) and the side regions (Ba, Bb), to be provided with a tread rubber; wherein the curing machine comprises:
a first heating means (58A, 59A) for heating the side regions (Ba, Bb) of the green tire (B) to a first temperature; and
a second heating means (60A, 60B) which is divided into a plurality of parts which are provided to be spaced apart from each other so as to correspond to the shoulder portions (B4) at end sides of the tread region (W) in the axial direction in the tread region (W), a portion of the second heating means (60A, 60B) that heats a middle portion of the tread region being thinned out so that the middle portion of the tread region (W) is not directly heated;
the second heating means (60A, 60B) is configured to heat the shoulder portions (B4) at both ends of the tread region to a second temperature which is lower than the first temperature, heat supplied to the shoulder portions (B4) of the tread region (W) being conducted to the middle portion of the tread region (W), whereby the amount of heat given to the tread region (W) is smaller than the amount of heat given to the side regions (Ba, Bb) by the first heating means (58A, 59A).

## Patentansprüche

1. Verfahren zum Fertigen eines Basisreifens (B), das die folgenden Schritte umfasst:
Einschließen einer Außenseite eines Reifenrohlings für einen Basisreifen (B), der Wulstbereiche (B3), Seitenbereiche (Ba, Bb) und einen als ein dünnwandiger Bereich geformten Laufflächenbereich (W), der dünner ist als die Dicke der Wulstbereiche (B3) und der Seitenbereiche (Ba, Bb), der mit einem Laufflächengummi versehen werden soll, einschließt, innerhalb einer Vulkanisierform, wobei:
Seitenbereiche (Ba, Bb) des Reifenrohlings (B) durch ein erstes Heizmittel (58A, 59A) erhitzt werden,
die Seitenbereiche (Ba, Bb) durch ein zweites Heizmittel (60A, 60B) erhitzt werden, das in mehrere Teile geteilt ist, die so bereitgestellt werden, dass sie voneinander beabstandet sind, um so den Schulterabschnitten (B4) an Endseiten des Laufflächenbereichs (W) in der Axialrichtung in dem Laufflächenbereich (W) zu entsprechen, wobei ein Abschnitt des zweiten Heizmittels (60A, 60B), der einen mittleren Abschnitt des Laufflächenbereichs erhitzt, ausgedünnt ist, so dass der mittlere Abschnitt des Laufflächenbereichs (W) nicht unmittelbar erhitzt wird,
Wärme, die den Schulterabschnitten (B4) des Laufflächenbereichs zugeführt wird, zu dem mittleren Abschnitt des Laufflächenbereichs (W) geleitet wird, und
ein Vulkanisationsformen derart durchgeführt wird, dass die an den Laufflächenbereich (W) des Reifenrohlings durch das zweite Heizmittel (60A, 60B) abgegebene Wärmemenge kleiner ist als die an die Seitenbereiche (Ba, Bb) des Reifenrohlings durch das erste Heizmittel (58A, 59A) abgegebene Wärmemenge.

2. Verfahren zum Fertigen eines Basisreifens (B) nach Anspruch 1, wobei die Erhitzungstemperatur durch das zweite Heizmittel (60A, 60B) niedriger festgesetzt ist als die Erhitzungstemperatur durch das erste Heizmittel (58A, 59A).

3. Verfahren zum Fertigen eines Basisreifens (B) nach Anspruch 1 oder Anspruch 2, wobei ein mittleres Heizmittel (60C) zum Erhitzen des mittleren Abschnitts des Laufflächenbereichs (W) innerhalb des zweiten Heizmittels (60A, 60B) bereitgestellt wird, so dass die Ausmaße des Erhitzens durch das mittlere Heizmittel (60C) und die Heizmittel, die in Positionen des zweiten Heizmittels (60A, 60B), die den Schulterabschnitten entsprechen, bereitgestellt werden, gesteuert werden können.

4. Verfahren zum Fertigen eines Basisreifens (B) nach einem der Ansprüche 1 bis 3, wobei ein Positionssteuerungsmittel bereitgestellt wird, das dazu in der Lage ist, die Position des zweiten Heizmittels (60A, 60B) in der Axialrichtung des Basisreifens (B) einzustellen.

5. Verfahren zum Fertigen eines Basisreifens (B) nach einem der Ansprüche 1 bis 4, wobei ein gemeinsames Heizmedium dem ersten Heizmittel (58A, 59A) und dem zweiten Heizmittel (60A, 60B) zugeführt wird.

6. Verfahren zum Fertigen eines Basisreifens (B) nach einem der Ansprüche 1 bis 5, wobei ein Element mit niedriger Wärmeleitung zwischen dem zweiten Heizmittel (60A, 60B) und dem Laufflächenbereich (W) bereitgestellt wird.

7. Verfahren zum Fertigen eines Basisreifens (B) nach einem der Ansprüche 1 bis 6, wobei die durch das zweite Heizmittel (60A, 60B) abgegebene Wärmemenge null ist.

8. Verfahren zum Fertigen eines Basisreifens (B) nach einem der Ansprüche 1 bis 7, wobei ein drittes Heizmittel (82) zum Erhitzen der Wulstabschnitte (81) des Basisreifens (B) bereitgestellt wird.

9. Verfahren zum Fertigen eines Basisreifens (B) nach Anspruch 8, wobei die an den Basisreifen (B) abgegebene Wärmemenge für die Wulstabschnitte (81), die Seitenbereiche (Ba, Bb) und den Laufflächenbereich (W), in dieser Reihenfolge, zunehmend kleiner ist.

10. Vulkanisiermaschine, die Folgendes umfasst:
eine Vulkanisierform zum Einschließen einer Außenseite eines Reifenrohlings für einen Basisreifen (B), der Wulstbereiche (B3), Seitenbereiche (Ba, Bb) und einen als ein dünnwandiger Bereich geformten Laufflächenbereich (W), der dünner ist als die Dicke der Wulstbereiche (B3) und der Seitenbereiche (Ba, Bb), der mit einem Laufflächengummi versehen werden soll, einschließt, wobei die Vulkanisiermaschine Folgendes umfasst:
ein erstes Heizmittel (58A, 59A) zum Erhitzen der Seitenbereiche (Ba, Bb) des Reifenrohlings (B) auf eine erste Temperatur,
ein zweites Heizmittel (60A, 60B), das in mehrere Teile geteilt ist, die so bereitgestellt werden, dass sie voneinander beabstandet sind, um so den Schulterabschnitten (B4) an Endseiten des Laufflächenbereichs (W) in der Axialrichtung in dem Laufflächenbereich (W) zu entsprechen, wobei ein Abschnitt des zweiten Heizmittels (60A, 60B), der einen mittleren Abschnitt des Laufflächenbereichs erhitzt, ausgedünnt ist, so dass der mittlere Abschnitt des Laufflächenbereichs (W) nicht unmittelbar erhitzt wird,
wobei das zweite Heizmittel (60A, 60B) dafür konfiguriert ist, die Schulterabschnitte (B4) an beiden Enden des Laufflächenbereichs auf eine zweite Temperatur zu erhitzen, die niedriger ist als die erste Temperatur, wobei Wärme, die den Schulterabschnitten (B4) des Laufflächenbereichs (W) zugeführt wird, zu dem mittleren Abschnitt des Laufflächenbereichs (W) geleitet wird, wodurch die an den Laufflächenbereich (W) abgegebene Wärmemenge kleiner ist als die an die Seitenbereiche (Ba, Bb) durch das erste Heizmittel (58A, 59A) abgegebene Wärmemenge.

## Revendications

1. Procédé pour fabriquer un pneumatique de base (B), comprenant les étapes qui consistent à :
renfermer un extérieur d'un pneumatique brut pour un pneumatique de base (B) qui inclut des régions de talon (B3), des régions latérales (Ba, Bb) et une région de bande de roulement (W) qui est formée en tant que section à paroi mince, laquelle région de bande de roulement présente une épaisseur qui est plus mince que les épaisseurs des régions de talon (B3) et des régions latérales (Ba, Bb), de manière à ce que cet extérieur est muni d'un caoutchouc de bande de roulement à l'intérieur d'un moule de vulcanisation ; dans lequel :
les régions latérales (Ba, Bb) du pneumatique brut (B) sont chauffées au moyen d'un premier moyen de chauffage (58A, 59A) ;
les régions latérales (Ba, Bb) sont chauffées à l'aide d'un deuxième moyen de chauffage (60A, 60B) qui est divisé selon une pluralité de parties qui sont prévues de manière à ce qu'elles sont espacées les unes des autres de manière à ce qu'elles correspondent aux sections d'épaulement (B4) au niveau de côtés d'extrémité de la région de bande de roulement (W) dans la direction axiale dans la région de bande de roulement (W), une section du deuxième moyen de chauffage (60A, 60B) qui chauffe une section intermédiaire de la région de bande de roulement étant réduite de telle sorte que la section intermédiaire de la région de bande de roulement (W) n'est pas chauffée directement ;
la chaleur qui est alimentée sur les sections d'épaulement (B4) de la région de bande de roulement est acheminée jusqu'à la section intermédiaire de la région de bande de roulement (W) ; et
un moulage à vulcanisation est réalisé de telle sorte que la quantité de chaleur qui est appliquée sur la région de bande de roulement (W) du pneumatique brut au moyen du deuxième moyen de chauffage (60A, 60B) est plus faible que la quantité de chaleur qui est appliquée sur les régions latérales (Ba, Bb) du pneumatique brut au moyen du premier moyen de chauffage (58A, 59A).

2. Procédé pour fabriquer un pneumatique de base (B) tel que revendiqué selon la revendication 1, dans lequel la température de chauffage qui est assurée par le deuxième moyen de chauffage (60A, 60B) est définie de telle sorte qu'elle est inférieure à la température de chauffage qui est assurée par le premier moyen de chauffage (58A, 59A).

3. Procédé pour fabriquer un pneumatique de base (B) tel que revendiqué selon la revendication 1 ou la revendication 2, dans lequel un moyen de chauffage intermédiaire (60C) pour chauffer la section intermédiaire de la région de bande de roulement (W) est prévu à l'intérieur du deuxième moyen de chauffage (60A, 60B) de telle sorte que les quantités de chaleur qui sont assurées par le moyen de chauffage intermédiaire (60C) et par les moyens de chauffage qui sont prévus au niveau de positions du deuxième moyen de chauffage (60A, 60B) qui correspondent aux sections d'épaulement peuvent être contrôlées.

4. Procédé pour fabriquer un pneumatique de base (B) tel que revendiqué selon l'une quelconque des revendications 1 à 3, dans lequel un moyen de contrôle de position qui permet de régler la position du deuxième moyen de chauffage (60A, 60B) dans la direction axiale du pneumatique de base (B) est prévu.

5. Procédé pour fabriquer un pneumatique de base (B) tel que revendiqué selon l'une quelconque des revendications 1 à 4, dans lequel un milieu de chauffage commun est alimenté sur le premier moyen de chauffage (58A, 59A) et sur le deuxième moyen de chauffage (60A, 60B).

6. Procédé pour fabriquer un pneumatique de base (B) tel que revendiqué selon l'une quelconque des revendications 1 à 5, dans lequel un élément de conductivité thermique faible est prévu entre le deuxième moyen de chauffage (60A, 60B) et la région de bande de roulement (W).

7. Procédé pour fabriquer un pneumatique de base (B) tel que revendiqué selon l'une quelconque des revendications 1 à 6, dans lequel la quantité de chaleur qui est appliquée par le deuxième moyen de chauffage (60A, 60B) est de zéro.

8. Procédé pour fabriquer un pneumatique de base (B) tel que revendiqué selon l'une quelconque des revendications 1 à 7, dans lequel un troisième moyen de chauffage (82) est prévu pour chauffer les régions de talon (81) du pneumatique de base (B).

9. Procédé pour fabriquer un pneumatique de base (B) tel que revendiqué selon la revendication 8, dans lequel la quantité de chaleur qui est appliquée sur le pneumatique de base (B) est de façon croissante plus faible pour les régions de talon (81), les régions latérales (Ba, Bb) et la région de bande de roulement (W), dans cet ordre.

10. Machine de vulcanisation, comprenant :
un moule de vulcanisation pour renfermer un extérieur d'un pneumatique brut pour un pneumatique de base (B) qui inclut des régions de talon (B3), des régions latérales (Ba, Bb) et une région de bande de roulement (W) qui est formée en tant que section à paroi mince, laquelle région de bande de roulement présente une épaisseur qui est plus mince que les épaisseurs des régions de talon (B3) et des régions latérales (Ba, Bb), de manière à ce que cet extérieur soit muni d'un caoutchouc de bande de roulement ; dans lequel la machine de vulcanisation comprend :
un premier moyen de chauffage (58A, 59A) pour chauffer les régions latérales (Ba, Bb) du pneumatique brut (B) jusqu'à une première température ; et
un deuxième moyen de chauffage (60A, 60B) qui est divisé selon une pluralité de parties qui sont prévues de manière à ce qu'elles soient espacées les unes des autres de manière à ce qu'elles correspondent aux sections d'épaulement (B4) au niveau de côtés d'extrémité de la région de bande de roulement (W) dans la direction axiale dans la région de bande de roulement (W), une section du deuxième moyen de chauffage (60A, 60B) qui chauffe une section intermédiaire de la région de bande de roulement étant réduite de telle sorte que la section intermédiaire de la région de bande de roulement (W) n'est pas chauffée directement ;
le deuxième moyen de chauffage (60A, 60B) est configuré de manière à ce qu'il chauffe les sections d'épaulement (B4) au niveau des deux extrémités de la région de bande de roulement jusqu'à une seconde température qui est inférieure à la première température, la chaleur qui est alimentée sur les sections d'épaulement (B4) de la région de bande de roulement (W) étant acheminée jusqu'à la section intermédiaire de la région de bande de roulement (W), d'où il résulte que la quantité de chaleur qui est appliquée sur la région de bande de roulement (W) est inférieure à la quantité de chaleur qui est appliquée sur les régions latérales (Ba, Bb) par le premier moyen de chauffage (58A, 59A).
